(19) Europäisches Patentamt
European Patent Office
Office européen des brevets

(11) **EP 2 705 268 B1**

(12) **EUROPÄISCHE PATENTSCHRIFT**

(45) Veröffentlichungstag und Bekanntmachung des Hinweises auf die Patenterteilung:
**23.09.2015 Patentblatt 2015/39**

(51) Int Cl.:
*F16D 25/12* *(2006.01)*    *F16D 48/02* *(2006.01)*

(21) Anmeldenummer: **12728372.9**

(22) Anmeldetag: **16.04.2012**

(86) Internationale Anmeldenummer:
**PCT/DE2012/000390**

(87) Internationale Veröffentlichungsnummer:
**WO 2012/152241 (15.11.2012 Gazette 2012/46)**

(54) **HYDRAULISCHE STRECKE MIT EINER ENTLÜFTUNGSEINRICHTUNG**

HYDRAULIC SECTION HAVING A VENTILATING DEVICE

PARCOURS HYDRAULIQUE DOTÉ D'UN DISPOSITIF D'ÉVACUATION DE L'AIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.05.2011 DE 102011100842**
**30.05.2011 DE 102011102814**

(43) Veröffentlichungstag der Anmeldung:
**12.03.2014 Patentblatt 2014/11**

(73) Patentinhaber: **Schaeffler Technologies AG & Co. KG**
**91074 Herzogenaurach (DE)**

(72) Erfinder:
• **RAMMHOFER, Thomas**
**77880 Sasbach (DE)**
• **GRABENSTÄTTER, Jan**
**76593 Gernsbach (DE)**

(56) Entgegenhaltungen:
**EP-A2- 1 978 271    DE-A1-102007 032 042**
**DE-C1- 19 540 753    US-A1- 2009 032 755**

**Beschreibung**

Die Erfindung betrifft eine hydraulische Strecke zur Betätigung einer Fahrzeugkupplung mit den Merkmalen des Oberbegriffs des Anspruchs 1.

Eine derartige hydraulischestrecke ist z.B. aus EP-A-1 978 271 bekannt.

Beim Betätigen eines Kupplungspedals und damit der Druckbeaufschlagung eines Hydraulikfluids innerhalb einer hydraulischen Strecke zur Kupplungsbetätigung, bestehend im Wesentlichen aus einem mit einem Kupplungspedal verbundenen Geberzylinder, einem Nehmerzylinder und einer diese verbindenden Hydraulikleitung, ist es bekannt, dass sich im Endbereich dieser hydraulischen Strecke, am Nehmerzylinder, Luft ansammeln kann. Obwohl diese Menge gering ist, wirkt sie sich auf den Ausrückweg am Nehmerzylinder zur Betätigung der Kupplung negativ aus. Aus diesem Grunde wird bekanntermaßen die Hydraulikleitung zwischen Geberzylinder und Nehmerzylinder, in Richtung Geberzylinder, steigend verlegt, so-dass die eingetragene Luft in Form von einer oder mehrerer Blasen während des Betriebes des Fahrzeugs durch die Auftriebskräfte in Richtung Geberzylinder transportiert wird, und über dessen Schnüffelbohrung in den Vorratsbehälter entweichen kann.

Allerdings kommt es vor, dass der Bauraum es nicht zulässt, einen stetig steigenden Verlauf der Hydraulikleitung in Richtung Geberzylinder zu realisieren.

Daher besteht die Aufgabe der Erfindung darin, eine hydraulische Strecke zur Betätigung einer Fahrzeugkupplung zu realisieren, deren Entlüftung während des Betriebes über den Geberzylinder gewährleistet ist, ohne Verwendung eines zusätzlichen Bauteils und ohne stetig steigernder Verlegung der Hydraulikleitung in Richtung Geberzylinder.

Diese Aufgabe wird mit einer hydraulischen Strecke zur Betätigung einer Fahrzeugkupplung mit den Merkmalen des Anspruchs 1 gelöst.

Danach wird eine hydraulische Strecke zur Betätigung einer Fahrzeugkupplung mit einem Geberzylinder, einem Nehmerzylinder und einer beide Zylinder verbindenden Hydraulikleitung durch eine Entlüftungseinrichtung in zwei Leitungsabschnitte unterteilt, wobei diese als Siffon und Steigleitung fungierenden Leitungsabschnitte der Hydraulikleitung in einem aus mindestens einem dieser Enden gebildeten Raum zu dieser Entlüftungseinrichtung zueinander beabstandet zusammen geführt werden.

In einer vorteilhaften Ausgestaltung der Erfindung ist das Ende Siffons als Stecker der Entlüftungseinrichtung ausgebildet und das Ende der Steigleitung als Gehäuse ausgeführt. Allerdingsist es auch möglich das Ende des Siffons als Gehäuse und das Ende der Steigleitung als Siffon auszubilden.

Dabei ist es vorteilhaft, dass das Ende des als Siffon fungierenden Leitungsabschnitts der Hydraulikleitung mit seiner Bohrung seitlich oben in den Raum einmündet und die untere Innenwand des Endes der Bohrung des als Steigleitung fungierenden Leitungsabschnitts der Hydraulikleitung in radialer Richtung die untere Begrenzung des Raumes bildet.

Vorteilhaft ist dabei, dass eine Höhendifferenz zwischen beiden Bohrungen vorhanden ist, um einen Luftauftrieb zu ermöglichen.

Eine weitere vorteilhafte Ausführung der Erfindung sieht vor, dass die Bohrung mit einer Länge im Gehäuse weiter geführt wird und der Innendurchmesser des Gehäuses mindestens über einen Bereich dieser Länge in radialer Richtung aufgeweitet ist. Allerdings ist es auch möglich, dass die Bohrung nicht im gebildeten Gehäuse weitergeführt wird, sondern an diesem endet, wenn es sich beispielsweise um ein in die hydraulische Strecke eingebundenes separates Bauteil mit einem Gehäuse handelt.

Weiter ist es vorteilhaft, dass die radiale Erweiterung des Innendurchmessers des Gehäuses in axialer Richtung mindestens über diesen Bereich den Raum im Gehäuse bildet. Eine weitere vorteilhafte Ausführung der Erfindung sieht vor, dass die Entlüftungseinrichtung am höchsten Punkt des vom Nehmerzylinder kommenden Leitungsabschnitts in der Hydraulikleitung angeordnet ist.

Die Begrenzung des Raumes in axialer Richtung im Innern des Gehäuses wird in vorteilhafter Weise durch die Stirnfläche des in das Gehäuse eingeführten Steckers gebildet.

Ebenso ist es vorteilhaft eine mit Anschlüssen versehene Entlüftungseinrichtung als separates Bauteil in die hydraulische Sterecke einzusetzen.

Eine weitere vorteilhafte Ausgestaltung der Erfindung sieht vor, dass die hydraulische Strecke mit mehreren Entlüftungseinrichtungen versehen ist.

Die Erfindung wird nachfolgend anhand eines Ausführungsbeispiels und zugehöriger Zeichnungen näher erläutert.

Es zeigen:

Figur 1    eine schematische Darstellung einer Ausführung einer erfindungsgemäßen hydraulischen Strecke zur Kupplungsbetätigung während eines Auskuppelvorganges;

Figur 2    die hydraulische Strecke aus Figur 1 während eines Einkuppelvorganges;

Figur 3    eine schematische Darstellung einer weiteren Ausführung einer erfindungsgemäße hydraulischen Strecke;

Figur 4    eine vergrößerte in die hydraulische Strecke gemäß der Figuren 1 bis 3 eingebrachten Entlüftungseinrichtung im Schnitt.

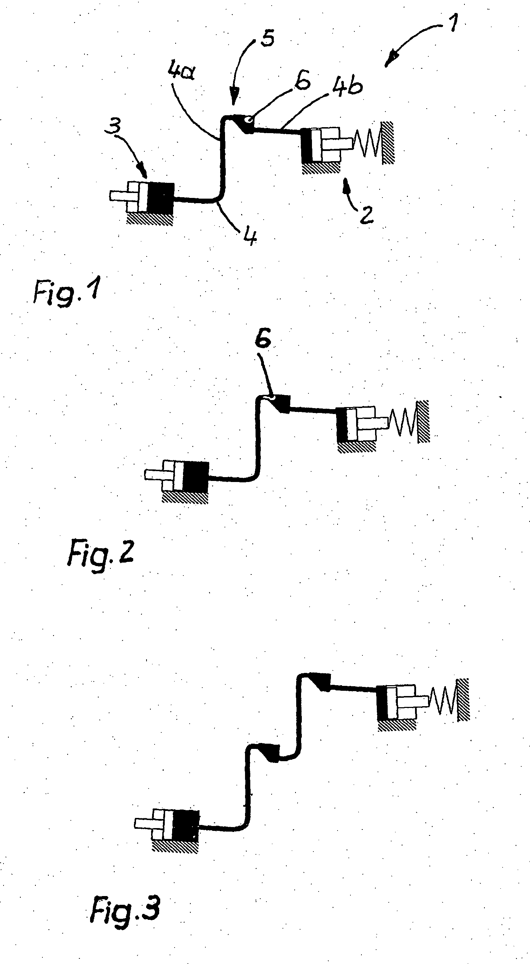

Die Figuren 1 und 2 zeigen eine hydraulische Strecke 1 zur Kupplungsbetätigung in zwei unterschiedlichen Betriebsstellungen. Die hydraulische Strecke 1 besteht im Wesentlichen aus einem Geberzylinder 3 und einem Nehmerzylinder 2. Diese sind über eine Hydraulikleitung 4 miteinander verbunden. Wie aus den Figuren 1 und 2 hervorgeht, ist die Hydraulikleitung 4 steigend in Richtung Nehmerzylinder 2 verlegt, wobei die in der Hydraulikleitung 4 vorhandene Luft 6 über einen in Richtung Geberzylinder 3 fallenden Leitungsabschnitt, der als Siffon 4a fungiert und somit als dieser bezeichnet wird, zum Geberzylinder 3 transportiert werden kann, in dem eine am höchsten Punkt des vom Nehmerzylinder 2 kommenden Leitungsabschnitts in die Hydraulikleitung 4 eingebrachte Entlüftungseinrichtung 5 somit am Anfang des Siffons 4a verhindert, dass sich die in der hydraulischen Strecke 1 befindliche Luft 6 beim Auskuppelvorgang zurück in Richtung Nehmerzylinder 2 bewegt.

Der vor dem Siffon 4a befindliche Leitungsabschnitt wird hierbei als Steigleitung 4b bezeichnet.

Nach dem Auskuppelvorgang gemäß Figur 1 wird die Luft 6 in der Steigleitung 4b vor dem Siffon 4a in Richtung Nehmerzylinder 2 verschoben. Da die Zeit zwischen dem Auskuppelvorgang und dem Einkuppelvorgang üblicherweise klein ist und die Luft 6 durch den Systemdruck stark komprimiert ist und somit deutlich geringere Auftriebskräfte besitzt, steigt die Luft 6 in der Steigleitung 4b vor dem Einkuppelvorgang (Figur 2) nahezu nicht in der Steigleitung 4b vor dem Siffon 4a an, wodurch dann für das zulässige Volumen im Bereich des Siffons 4a gilt:

$$V_{Siffon} < V_{Hub,Nz} - V_{Steigleitung}, \text{ wobei}$$

$V_{HubNz}$ das Hubvolumen ist, welches der Nehmerzylinder 2 beim Auskuppelvorgang verschiebt und

$V_{Steigleitung}$ das Volumen in der Steigleitung 4b zwischen Siffon 4a und Luftblase 6 nach dem Auskuppelvorgang.

Bei dieser erfindungsgemäßen hydraulischen Strecke 1 mit integrierter Entlüftungseinrichtung 5 ist $V_{Steigleitung}$ weiter relativ klein, das heißt, das Volumen des Siffons 4a kann groß gewählt werden.

Figur 3 zeigt eine weitere Ausführung einer erfindungsgemäßen hydraulischen Strecke 1, bei der durch das Hintereinanderschalten mehrerer Siffons 4a mit jeweils eingebundener Entlüftungseinrichtung 5 beliebige Siffonhöhen und damit Bauteile im Motorraum überwunden werden können.

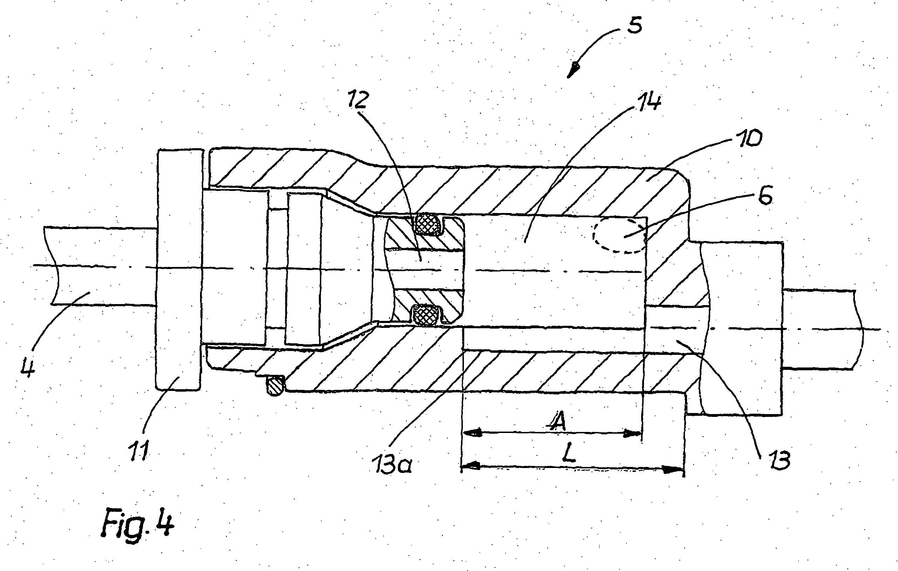

Figur 4 zeigt eine Schnittdarstellung der in die hydraulische Strecke **1** eingebundenen Entlüftungseinrichtung 5. Diese besteht im Wesentlichen aus einem als Buchse ausgebildetem Gehäuse 10, das beispielsweise an den als Steigleitung 4b fungierenden Leitungsabschnitt angespritzt oder angeschweißt ist, um sicher zu stellen, dass es lagerichtig sitzt und eine weitere Verdrehsicherung somit entfallen kann.

Am Gehäuse 10 kann auch ein Konnektor zum Nehmerzylinder 2 vorgesehen sein. Das Gehäuse 10 kann dann direkt, mit einer Verdrehsicherung zum Nehmerzylinder 2, an den Nehmerzylinder 2 angebundne werden.

Der Grundgedanke des Aufbaus dieser Entlüftungseinrichtung 5 ist der, den Bereich der Hydraulikleitung 4 an deren Ende über einem vorgegebenen Bereich radial so stark zu vergrößern, dass das Hydraulikfluid beim Strömen durch diesen gebildeten Raum in Richtung Nehmerzylinder 2 ganz oder teilweise unter der Luftblase 6 hindurchströmt. Dieser Bereich der Hydraulikleitung bildet somit die eigentliche Entlüftungseinrichtung 5, ohne Verwendung eines zusätzlichen Gehäuses bzw. Bauteils.

Allerdings kann die Entlüftungseinrichtung 5 auch als separates Bauteil ausgeführt sein, das zwischen die beiden Leitungsabschnitte eingesetzt wird.

Wie aus Figur 4 ersichtlich, ist das Gehäuse 10 folgendermaßen aufgebaut:

Endseitig des Gehäuses 10, wird das in Form eines Steckers 11 ausgebildete Ende der Hydraulikleitung 4 soweit dichtend in dieses eingesetzt, dass vor dem von einer Bohrung 12 durchzogenen Stecker 11 ein Raum 14 verbleibt, der ebenso wie das Gehäuse 10 vorzugsweise zylinderförmig ausgeführt ist. Am gegenüber liegenden unteren Ende des Raumes 14 befindet sich der vom Nehmerzylinder 2 kommende Zulauf in Form einer Bohrung 13. Dieser ist so im Gehäuse 10 angeordnet und dimensioniert, dass die Bohrung 12 vom Stecker 11 möglichst hoch über der Bohrung 13 vom Zulauf des Nehmerzylinders 2 liegt, das heißt, die Symmetrieachse der Bohrung 12 des Steckers 11 und damit des Zulaufes vom Geberzylinder 3 liegt parallel und beabstandet zur Symmetrieachse der Bohrung des Zulaufes des Nehmerzylinders 2.

Aufgrund der Zusammenführung beider zueinander beabstandeten Bohrungen 12, 13 der Zuläufe von der Seite und von unten in den Raum 14 reduziert sich die Strömungsgeschwindigkeit des vom Geberzylinder 3 zum Nehmerzylinder 2 strömenden, mit Luft angereicherten Hydraulikfluids.

Gleichzeitig steigt bei dieser Verlangsamung der Strömungsgeschwindigkeit die Luft in Form einer Luftblase 6 in einen oberen Bereich 15 des Raumes 14 und verbleibt dort an der senkrechten Wand. Dadurch wird das Hydraulikfluid verdrängt und "fällt" unter diese Luftblase 6, wodurch es über die Bohrung 13 in den Anschluss des Nehmerzylinders 2 gelangt.

Strömt das Fluid vom Nehmerzylinder 2 zum Geberzylinder 3, transportiert die bewegte Hydraulikfuidsäule die Luftblase 6 durch die Bohrung 12 des Stecker 11, bzw. des Zulaufes des Geberzylinders 3, wodurch diese weiter in Richtung Geberzylinder 2 über den Siffon 4a aus der hydraulischen Strecke 1 in üblicher Weise abtransportiert werden kann.

**Bezugszeichenliste**

| 1 | Hydraulische Strecke |
|---|---|
| 2 | Nehmerzylinder |
| 3 | Geberzylinder |
| 4 | Hydraulikleitung |
| 4a | Leitungsabschnitt / Siffon |
| 4b | Leitungsabschnitt/Steigleitung |
| 5 | Entlüftungseinrichtung |
| 6 | Luftblase |
| 10 | Gehäuse |
| 11 | Stecker |
| 12 | Bohrung |
| 13 | Bohrung |
| 13a | Innenwand |
| 14 | Raum |
| 15 | Bereich |
| A | Bereich |
| L | Länge |

**Patentansprüche**

1. Hydraulische Strecke (1) zur Betätigung einer Fahrzeugkupplung mit einem Geberzylinder (3), einem Nehmerzylinder (2) und einer beide Zylinder verbindende Hydraulikleitung (4), die durch eine Entlüftungseinrichtung (5) in zwei Leitungsabschnitte unterteilt ist, **dadurch gekennzeichnet, dass** diese als Siphon (4a) und Steigleitung (4b) fungierenden Leitungsabschnitte der Hydraulikleitung (4) in einem aus mindestens einem dieser Enden gebildeten Raum (14) zu dieser Entlüftungseinrichtung (5) zueinander beabstandet zusammengeführt werden.

2. Hydraulische Strecke (1) nach Anspruch 1, **dadurch gekennzeichnet, dass** das Ende des Siphons (4a) als Stecker (11) der Entlüftungseinrichtung (5) ausgebildet ist.

3. Hydraulische Strecke (1) nach Anspruch 1, **dadurch gekennzeichnet, dass** das Ende der Steigleitung (4b) als Gehäuse (10) ausgeführt ist.

4. Hydraulische Strecke (1) nach Anspruch 1, **dadurch gekennzeichnet, dass** das Ende des als Siphon (4a) fungierenden Leitungsabschnitts der Hydraulikleitung (4) mit seiner Bohrung (12) seitlich oben in den Raum (14) einmündet und die Innenwand (13a) des Endes die Bohrung (13) des als Steigleitung (4b) fungierenden Leitungsabschnitts der Hydraulikleitung (4) in radialer Richtung die untere Begrenzung des Raumes (14) bildet.

5. Hydraulische Strecke (1) nach Anspruch 2 und 4, **dadurch gekennzeichnet, dass** die Bohrung (13) mit einer Länge (L) im Gehäuse (10) weitergeführt wird und der Innendurchmesser des Gehäuses (10) mindestens über einen Bereich (A) dieser Länge (L) radial aufgeweitet ist.

6. Hydraulische Strecke (1) nach Anspruch 5, **dadurch gekennzeichnet, dass** die radiale Erweiterung des Innendurchmessers des Gehäuses (10) in axialer Richtung mindestens über den Bereich (A) den Raum (14) im Gehäuse (10) bildet.

7. Hydraulische Strecke (1) nach Anspruch 1, **dadurch gekennzeichnet, dass** die Entlüftungseinrichtung (5) am höchsten Punkt des vom Nehmerzylinder (2) kommenden Leitungsabschnittes (4b) in der Hydraulikleitung (4) angeordnet ist.

8. Hydraulische Strecke (1) nach Anspruch 6, **dadurch gekennzeichnet, dass** die Stirnfläche des in das Gehäuse (10) eingeführten Steckers (11) die axiale Begrenzung des Raumes (14) im Gehäuse (10) bildet.

9. Hydraulische Strecke (1) nach Anspruch 1, **dadurch gekennzeichnet, dass** eine mit Anschlüssen versehene Entlüftungseinrichtung (5) in die hydraulische Strecke (1) einsetzbar ist.

10. Hydraulische Strecke (1) nach den Ansprüchen 1 bis 3, **dadurch gekennzeichnet, dass** die hydraulische Strecke (1) mehrere Entlüftungseinrichtungen (5) aufweist.

**Claims**

1. Hydraulic section (1) for actuating a vehicle clutch having a master cylinder (3), a slave cylinder (2) and a hydraulic line (4) which connects both cylinders and is divided by a bleeding device (5) into two line sections, **characterized in that** said line sections of the hydraulic line (4) which act as siphon (4a) and riser (4b) are guided together, spaced apart from one another, in a space (14) which is formed from at least one of these ends to said bleeding device (5).

2. Hydraulic section (1) according to Claim 1, **characterized in that** the end of the siphon (4a) is configured as a connector (11) of the bleeding device (5).

3. Hydraulic section (1) according to Claim 1, **characterized in that** the end of the riser (4b) is configured as a housing (10).

**4.** Hydraulic section (1) according to Claim 1, **characterized in that** the end of that line section of the hydraulic line (4) which acts as siphon (4a) opens with its hole (12) laterally at the top into the space (14), and the inner wall (13a) of the end of the hole (13) of that line section of the hydraulic line (4) which acts as riser (4b) forms the lower boundary of the space (14) in the radial direction.

**5.** Hydraulic section (1) according to Claims 2 and 4, **characterized in that** the hole (13) is routed further with a length (L) in the housing (10) and the internal diameter of the housing (10) is widened radially at least over a region (A) of said length (L).

**6.** Hydraulic section (1) according to Claim 5, **characterized in that** the radial widening of the internal diameter of the housing (10) forms the space (14) in the housing (10) in the axial direction at least over the region (A).

**7.** Hydraulic section (1) according to Claim 1, **characterized in that** the bleeding device (5) is arranged in the hydraulic line (4) at the highest point of the line section (4b) which comes from the slave cylinder (2).

**8.** Hydraulic section (1) according to Claim 6, **characterized in that** the end face of the connector (11) which is introduced into the housing (10) forms the axial boundary of the space (14) in the housing (10).

**9.** Hydraulic section (1) according to Claim 1, **characterized in that** a bleeding device (5) which is provided with connections can be inserted into the hydraulic section (1).

**10.** Hydraulic section (1) according to Claims 1 to 3, **characterized in that** the hydraulic section (1) has a plurality of bleeding devices (5).

**Revendications**

**1.** Section hydraulique (1) pour l'actionnement d'un embrayage de véhicule, comprenant un maître-cylindre (3), un cylindre récepteur (2) et une conduite hydraulique (4) reliant les deux cylindres, laquelle est divisée en deux portions de conduite par un dispositif de désaérage (5), **caractérisée en ce que** ces portions de conduite de la conduite hydraulique (4) servant de siphon (4a) et de conduite montante (4b) sont guidées ensemble dans un espace (14) formé à partir d'au moins l'une de ces extrémités, de manière espacée l'une de l'autre vers ce dispositif de désaérage (5).

**2.** Section hydraulique (1) selon la revendication 1, **caractérisée en ce que** l'extrémité du siphon (4a) est réalisée sous forme de connecteur (11) du dispositif de désaérage (5).

**3.** Section hydraulique (1) selon la revendication 1, **caractérisée en ce que** l'extrémité de la conduite montante (4b) est réalisée sous forme de boîtier (10).

**4.** Section hydraulique (1) selon la revendication 1, **caractérisée en ce que** l'extrémité de la portion de conduite de la conduite hydraulique (4), servant de siphon (4a), débouche avec son alésage (12) latéralement en haut dans l'espace (14) et la paroi intérieure (13a) de l'extrémité de l'alésage (13) de la portion de conduite de la conduite hydraulique (4) servant de conduite montante (4b) forme dans la direction radiale la limitation inférieure de l'espace (14).

**5.** Section hydraulique (1) selon les revendications 2 et 4, **caractérisée en ce que** l'alésage (13) est guidé davantage avec une longueur (L) dans le boîtier (10) et le diamètre intérieur du boîtier (10) est élargi radialement au moins sur une région (A) de cette longueur (L).

**6.** Section hydraulique (1) selon la revendication 5, **caractérisée en ce que** l'élargissement radial du diamètre intérieur du boîtier (10) forme l'espace (14) dans le boîtier (10) dans la direction axiale au moins sur la région (A).

**7.** Section hydraulique (1) selon la revendication 1, **caractérisée en ce que** le dispositif de désaérage (5) est disposé dans la conduite hydraulique (4) au niveau du point le plus élevé de la portion de conduite (4b) provenant du cylindre récepteur (2).

**8.** Section hydraulique (1) selon la revendication 6, **caractérisée en ce que** la surface frontale du connecteur (11) introduit dans le boîtier (10) forme la limitation axiale de l'espace (14) dans le boîtier (10).

**9.** Section hydraulique (1) selon la revendication 1, **caractérisée en ce qu'**un dispositif de désaérage (5) pourvu de raccords peut être inséré dans la section hydraulique (1).

**10.** Section hydraulique (1) selon les revendications 1 à 3, **caractérisée en ce que** la section hydraulique (1) présente plusieurs dispositifs de désaérage (5).

Fig.1

Fig.2

Fig.3

Fig. 4

EP 2 705 268 B1

**IN DER BESCHREIBUNG AUFGEFÜHRTE DOKUMENTE**

**In der Beschreibung aufgeführte Patentdokumente**

- EP 1978271 A